# EUROPEAN PATENT APPLICATION

(11) **EP 3 046 008 A1**
(43) Date of publication of application: **20.07.2016**
(21) Application number: 14877311.2
(22) Date of filing: 29.12.2014
(51) Int. Cl.: G06F 3/023, G06F 3/048

(54) **DISPLAY DEVICE AND METHOD FOR PROVIDING RECOMMENDED CHARACTERS FROM SAME**

(30) Priority: 03.01.2014 KR 20140000895
(71) Applicant: Samsung Electronics Co., Ltd., Gyeonggi-do 16677 (KR)
(72) Inventor: KIM, Min-jin, Pyeongtaek-si Gyeonggi-do 450-760 (KR); JUNG, Do-sung, Seoul 138-848 (KR); HWANG, Je-sun, Bucheon-si Gyeonggi-do 420-851 (KR)
(74) Representative: Appleyard Lees IP LLP
(86) International application number: PCT/KR2014/012945
(87) International publication number: WO 2015/102325

(57) **Abstract**

Provided are a display device and a method for providing recommended characters from the same. The method for providing recommended characters from the display device includes displaying a character input UI including a plurality of character items, and providing a recommended character item with respect to a selected character item, according to different methods depending on a character input mode, when one of the plurality of character items has been selected.

## Description

### [Technical Field]

Apparatuses and methods consistent with the present disclosure relate to a display device and a method for providing recommended characters from the same, and more particularly, to display device capable of providing a recommended character item onto a character input UI displayed on a display and a method for providing recommended characters from the same.

### [Background Art]

A recent display device does not unilaterally provide a function or information to a user but provides various functions or information in response to a user demand. For example, a recently released TV provides broadcasting receiving function as well as user interaction functions such as an application execution function, and a web browsing search function.

Therefore, the recent display device provides a character input UI (for example, virtual keyboard, etc.) to a user to receive the user demand. However, when inputting characters using the character input UI, the user has a trouble in moving a cursor or a highlight. In particular, when the character input UI is provided through a large-screen display device such as a TV, since a size of the character input UI displayed on the TV is very large, it takes a user a long time to input characters by moving the cursor or the highlight.

To overcome the above problem, the display device has adopted a function of providing recommended characters to a character input UI to more conveniently input characters. For example, as disclosed in U.S. Patent Application Publication No. 2011-0099506 and U.S. Patent No. US 7443316, the display device provides recommended characters to the vicinity of the characters selected by the user.

However, when characters are selected by moving the highlight using an input device like a four-way key, if the recommended characters are provided to the vicinity of the characters, the highlight moving frequency by the user is reduced, and as a result convenience may be improved. However, when the characters are selected by moving the cursor depending on the user motion, it is difficult to perform a fine manipulation and when the recommended characters are provided to the vicinity of the characters, there is a problem in that characters that are not the user wanted characters may be selected.

### [Disclosure]

### [Technical Problem]

The present disclosure provides a display device capable of providing recommended characters, according to different methods depending on a character select mode and a method for providing recommended characters from the same.

### [Technical Solution]

According to an aspect of the present disclosure, a method for providing recommended characters from a display device includes: displaying a character input UI including a plurality of character items; and providing a recommended character item with respect to a selected character item, according to different methods depending on a character input mode, when one of the plurality of character items is selected.

In the providing, when one of the plurality of character items is selected in a first character input mode, the recommended character item of the selected character item may be displayed around the selected character item, and when one of the plurality of character items is selected in a second character input mode, a character item corresponding to a recommended character of the selected character item from the plurality of character items may be displayed to be differentiated from other character items.

In the providing, when one of the plurality of character items is selected in the first character input mode, the recommended character item may be displayed to partially overlap with the selected character item in up, down, left, and right directions of the selected character item.

In the providing, when one of the plurality of character items is selected in the second character input mode, at least one of color, brightness, size, transparency, and blink of the character item corresponding to the recommended character of the selected character item may be changed so that the character item is displayed to be differentiated from the other character items.

The first character input mode may be a mode of inputting characters using a highlight through a four-way key or a touch pad and the second character input mode may be a mode of inputting characters using a cursor depending on a user motion.

The method for providing recommended characters may further include: converting the character input mode of the display device into the second character input mode, when a preset trigger operation is performed while the first character input mode is maintained.

The preset trigger operation may be an operation of selecting a preset button of an input for inputting characters or touching a preset region.

In the providing, at least one character having the highest probability among characters that may be input subsequent to a character included in the selected character item may be searched as at least one recommended character with respect to the character included in the selected character item by using a dictionary database and a user database in which word use information of a user is recorded.

According to another aspect of the present disclosure, a display device includes: a display displaying a character input UI including a plurality of character items; an input receiving a user command for inputting characters; and when one of the plurality of character items is selected through the input, a controller providing recommended character item with respect to the selected character item, according to different methods depending on a character input mode.

The controller may control the display to display the recommended character item of the selected character item around the selected character item when one of the plurality of character items is selected in a first character input mode, and display a character item corresponding to a recommended character of the selected character item from the plurality of character items so that the character item is differentiated from other character items, when one of the plurality of character items is selected in a second character input mode.

The controller may control the display to display the recommended character item so that the recommend character item partially overlaps with the selected character item in up, down, left, and right directions of the selected character item, when one of the plurality of character items is selected in the first character input mode.

When one of the plurality of character items is selected in the second character input mode, the controller may control the display to change at least one of color, brightness, size, transparency, and blink of the character item corresponding to the recommended character of the selected character item so that the character item is displayed to be differentiated from the other character items.

The first character input mode may be a mode of inputting characters using a highlight through a four-way key or a touch pad and the second character input mode may be a mode of inputting characters using a cursor depending on a user motion.

The controller may convert the character input mode of the display device into the second character input mode, when a preset trigger operation is performed while the first character input mode is maintained.

The preset trigger operation may be an operation of selecting a preset button of an input for inputting characters or touching a preset region.

The controller may search for at least one character having the highest probability among characters that may be input subsequent to a character included in the selected character item by using a dictionary database and a user database in which word use information of a user is recorded as at least one recommended character with respect to the character included in the selected character item.

### [Advantageous Effects]

As described above, it is possible for a user to more quickly and accurately input characters independent of the input mode by providing the recommended characters, according to different methods depending on the input mode.

### [Description of Drawings]

FIG. 1 is a block diagram schematically illustrating a configuration of a display device according to an exemplary embodiment of the present disclosure.
FIG. 2 is a block diagram illustrating in detail the configuration of the display device according to an exemplary embodiment of the present disclosure.
FIGS. 3 to 8 are diagrams for describing an example of providing recommended characters in a first character input mode according to an exemplary embodiment of the present disclosure.
FIGS. 9 to 14 are diagrams for describing an example of providing recommended characters in a second character input mode according to an exemplary embodiment of the present disclosure.
FIG. 15 is a flow chart for describing a method for providing recommended characters of a display device according to an exemplary embodiment of the present disclosure.

### [Best Mode]

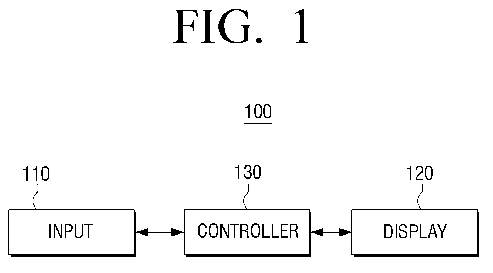

Hereinafter, exemplary embodiments of the present disclosure will be described in more detail with reference to the accompanying drawings. FIG. 1 is a block diagram schematically illustrating a configuration of a display device according to an exemplary embodiment of the present disclosure. As illustrated in FIG. 1, the display device 100 includes an input 110, a display 120, and a controller 130. Meanwhile, according to an exemplary embodiment of the present disclosure, the display device 100 may be a smart TV, which is only an example and may be implemented as various display devices such as a smart phone, a tablet PC, a desktop PC, a monitor, and a projector.

The input 110 may receive a user command for controlling the display device 100. In particular, when a character input user interface (UI) including a plurality of character items is displayed on the display 120, the input 110 may receive the user command for selecting one of the plurality of character items.

Meanwhile, according to the exemplary embodiment of the present disclosure, the input 110 may be a remote controller including a motion sensor and a touch sensor, which is only an example, and may be implemented as various input devices such as a pointing device and a mouse.

The display 120 outputs image data depending on a control of the controller 130. In particular, when there is a need to input characters to the display device 100, the display 120 may display the character input UI. In this case, the character input UI is a UI including a plurality of character items and a plurality of function items (for example, enter, space, etc.) and may be implemented as a virtual keyboard.

The controller 130 controls an overall operation of the display device 100 according to the user command input through the input 110. In particular, when one of the plurality of character items included in the character input UI is selected through the input 110, the controller 130 may provide a recommended character item with respect to the selected character item according to different methods depending on a character input mode.

In detail, when one of the character items included in the character input UI is selected while the character input UI in the virtual keyboard form is displayed, the controller 130 may search for at least one character having the highest probability among characters that may be input subsequent to a character included in the selected character item as at least one recommended character with respect to the character included in the selected character item by using a dictionary database and a user database in which word use information of a user is recorded. For example, when "D" is selected from a plurality of character items, the controller 130 may search for "A","I","O", and "U" having the highest probability among characters that may be input subsequent to the "D" as recommended characters by using the dictionary database and the user database.

Further, when the recommended character is searched, the controller 130 may provide the recommended character item according to different methods depending on the character input mode. In this case, the character input mode may include a first character input mode of inputting characters using a highlight through a four-way key or a touch pad and a second character input mode of inputting characters using a cursor depending on a user motion. Here, when the preset trigger operation is performed while the first character input mode is maintained, the controller 130 may convert the character input mode of the display device 100 from the first character input mode into the second character input mode. The preset trigger operation may be an operation of selecting a preset button of the input 110 or an operation of touching a preset region.

In particular, when one of the plurality of character items is selected in the first character input mode, the controller 130 may control the display 120 to display the recommended character item of the selected character item around the selected character item. In detail, when one of the plurality of character items is selected in the first character input mode, the controller 130 may control the display 120 to display the recommended character item so that the recommended character item partially overlaps with the selected character item in up, down, left, and right directions of the selected character item. For example, when the "D" character item among the plurality of character items is selected, the controller 130 may control the display 120 to display the recommended character item so that the recommended character items including the "A", "I", "O", and "U" that are the recommended characters of the "D" character item partially overlap with the "D" character item in the up, down, left, and right directions of the selected "D" character item.

When one of the plurality of character items is selected in the second character input mode, the controller 130 may control the display 120 to display the character item corresponding to the recommended character of the selected character item among the plurality of character items so that the character item is differentiated from other character items. In detail, when one of the plurality of character items is selected in the second character input mode, the controller 130 may control the display 120 to change at least one of color, brightness, size, transparency, and blink of the character item corresponding to the recommended character of the selected character item so that the character item is displayed to be differentiated from other character items. For example, when the "D" character item among the plurality of character items is selected, the controller 130 may control the display 120 to display the character items including the "A", "I", "O", and "U" that are the recommended characters of the "D" character item among the character items on the virtual keyboard in different colors from other character items.

As described above, the recommended characters are provided according to different methods depending on the character input mode, such that a user may receive the recommended characters according to the appropriate method depending on the input mode, thereby more quickly and accurately inputting characters.

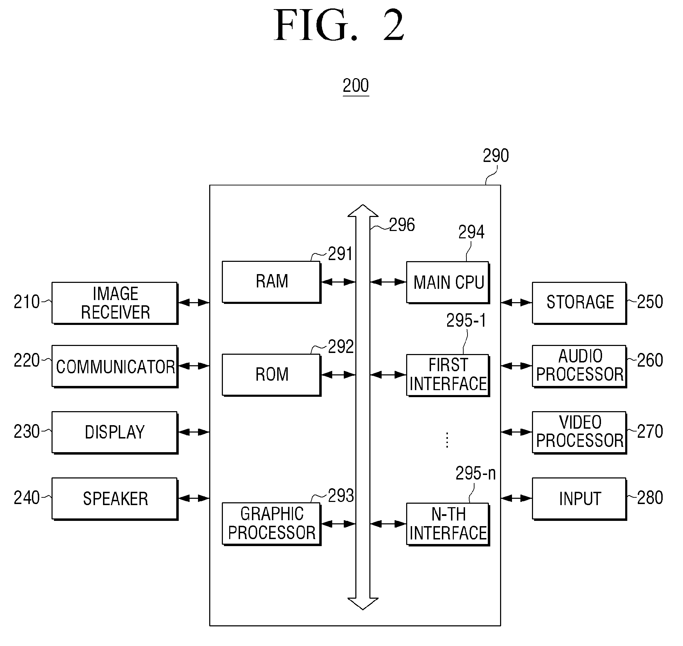

Hereinafter, the display device will be described in more detail with reference to FIGS. 2 to 14.

FIG. 2 is a block diagram illustrating in detail a configuration of the display device according to another exemplary embodiment of the present disclosure. As illustrated in FIG. 2, according to the exemplary embodiment of the present disclosure, a display device 200 includes an image receiver 210, a communicator 220, a display 230, a speaker 240, a storage 250, an audio processor 260, a video processor 270, an input 280, and a controller 290.

The image receiver 210 receives image data through various sources. For example, the image receiver 210 may receive broadcast data from an external broadcasting station, receive the image data from external apparatuses (for example, DVD, BD player, and the like), and receive the image data stored in the storage 250.

The communicator 220 is a component performing communication with various types of external devices or external servers according to various types of communication schemes. The communicator 220 may include various communication chips such as a Wi-Fi chip, a Bluetooth chip, a near field communication (NFC) chip, a wireless communication chip, and the like. Here, the Wi-Fi chip, the Bluetooth chip, and the NFC chip perform communication in a Wi-Fi scheme, a Bluetooth scheme, an NFC scheme, respectively. Among them, the NFC chip means a chip operated in the NFC scheme using a band of 13.56MHz among various RF-ID frequency bands such as 135kHz, 13.56MHz, 433MHz, 860∼960MHz, 2.45GHz, and the like. In the case of using the Wi-Fi chip or the Bluetooth chip, various connection information such as an SSID, a session key, and the like, is first transmitted and received and communication is connected by using the connection information. Then, various information may be transmitted and received. The wireless communication chip means a chip performing communication depending on various communication protocols such as IEEE, Zigbee, 3rd generation, 3rd generation partnership project (3GPP), long term evolution (LTE), and the like.

The display 230 displays a video frame obtained by processing the image data, that are received by the image receiver 210, by the video processor 270, and at least one of various screens generated from the graphic processor 293. In particular, the display 210 may display the character input UI (for example, virtual keyboard) including the plurality of character items. Further, the display 210 may display a cursor or a highlight to select the character item in the character input UI.

The speaker 240 is a component for outputting various alarm sounds or speech messages in addition to various audio data that is processed by the audio processor 260.

The storage 250 stores various modules for driving the display device 200. For example, the storage 250 may store software including a base module, a sensing module, a communication module, a presentation module, a web browser module, and a service module. In this case, the base module is a basic module which processes signals transferred from each hardware included in the display device 200 and transfers the processed signals to an upper layer module. The sensing module, which is a module collecting information from various sensors and analyzing and managing the collected information, may include a face recognizing module, an audio recognizing module, a motion recognizing module, an NFC recognizing module, and the like. The presentation module is a module for configuring a display screen and may include a multimedia module which plays and outputs multimedia contents and an UI rendering module which performs UI and graphic processing. The communication module is a module for performing communication with the outside. The web browser module means a module performing web browsing to access a web server. The service module is a module including various applications for providing various services.

Further, the storage 250 stores a dictionary database and a user database that provide the recommended character to the user. In detail, the dictionary database is a database in which words having a general meaning are recorded and the user database is a database in which the word use information of the user within the preset period is recorded. Meanwhile, the forgoing exemplary embodiment describes that the dictionary database and the user database are stored in the storage 250, which is only an example. Therefore, the dictionary database and the user database may be stored in an external apparatus that is connected through a network.

The audio processor 260 is a component for performing processing on audio data. The audio processor 260 may perform various processing such as decoding, amplification, and noise filtering, on the audio data.

The video processor 270 is a component for processing image data received by the image receiver 210. The video processor 270 may perform various image processings, such as decoding, scaling, noise filtering, frame rate conversion, and resolution conversion, on the image data.

The input 280 is a component for receiving the user command for controlling the overall operation of the display device 200. In particular, the input 280 may be implemented as a remote controller including a four-way key, a touch pad, a motion sensor, etc. In this case, the input 280 may use the touch pad or the four-way key to move the highlight and use the motion sensor to move the cursor.

Meanwhile, according to the exemplary embodiment of the present disclosure, the input 280 may be implemented as one remote controller including the four-way key, the touch pad, and the motion sensor, which is only an example, Therefore, the respective input components may be implemented as different input devices. For example, the input 280 may include the remote controller including the four-way key and the touch pad and a pointing device detecting a user motion.

The controller 290 controls the overall operation of the display device 200 by using various programs stored in the storage 250.

As illustrated in FIG. 2, the controller 290 includes an RAM 291, an ROM 292, a graphic processor 293, a main CPU 294, first to n-th interfaces 295-1 to 295-n, and a bus 296. In this case, the RAM 291, the ROM 292, the graphic processor 293, the main CPU 294, the first to n-th interfaces 295-1 to 295-n, and the like may be connected to each other via the bus 296.

The ROM 292 is stored with a set of commands for system booting. When a turn on command is input and thus power is supplied, the main CPU 294 copies an O/S stored in the storage 250 to the RAM 291 according to the command stored in the ROM 292 and executes the O/S to boot the system. If the booting is completed, the main CPU 294 copies various application programs stored in the storage 250 to the RAM 291 and executes the application programs copied to the RAM 291, thereby performing various operations.

The graphic processor 293 uses an operator (not illustrated) and a renderer (not illustrated) to generate a screen including various objects such as an icon, an image, and a text. The operator operates attribute values, such as coordinate values, forms, sizes, and colors in which each object is to be displayed according to a layout of the screen, based on the control command received from the input 280. The renderer generates a screen of various layouts including an object based on the attribute values that are operated by the operator. The screen generated by the renderer is displayed in a display region of the display 230.

The main CPU 294 accesses the storage 250 to perform booting using the O/S stored in the storage 250. Further, the main CPU 294 performs various operations using various programs, contents, data, and the like that are stored in the storage 250.

The first to n-th interfaces 295-1 to 295-n are connected to the foregoing various components. One of the interfaces may be a network interface which is connected to the external apparatuses through a network.

Further, the controller 290 may control the display 230 to display the character input UI according to the user command. In this case, the character input UI may be a virtual keyboard and the character item may consist of a key edge of a preset shape (for example, quadrangle) and characters (for example, alphabet, number, etc.) included in the key edge.

When one of the plurality of character items is selected while the character input UI is displayed, the controller 290 may provide the recommended character item of the selected character item according to different methods depending on the character input mode. In this case, the character input mode may include a first character input mode of inputting characters using a highlight using a four-way key or a touch pad and a second character input mode of inputting characters using a cursor depending on a user motion. Here, when a preset trigger operation is performed while the first character input mode is maintained, the controller 290 may convert the character input mode of the display device 200 from the first character input mode into the second character input mode. The preset trigger operation may be an operation of selecting a preset button of the input 280 or an operation of touching a preset region. That is, if characters are input using the highlight using the four-way key or the touch pad and then the preset button is selected or a trigger motion touching the preset region is input, the controller 290 may convert the character input mode into the second mode to input characters using the cursor depending on the user motion.

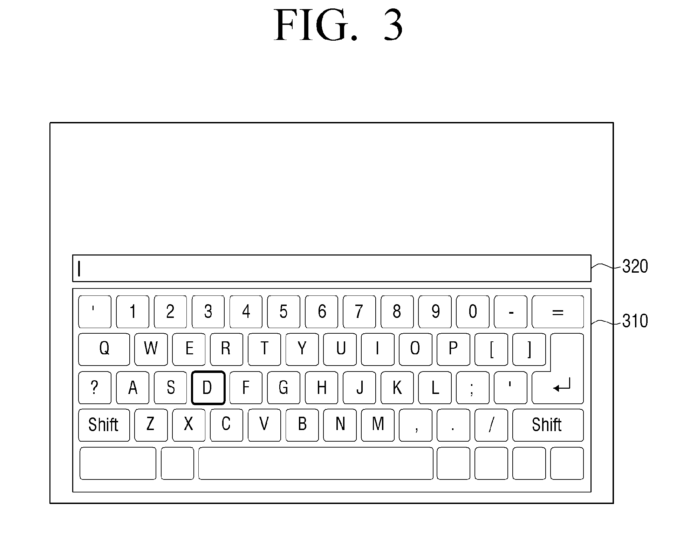

Hereinafter, a method for providing recommended characters in a first character input mode will be described with reference to FIGS. 3 to 8.

Above all, as illustrated in FIG. 3, if the input 280 inputs a select command while a character input UI 310 and a character input window 320 are displayed and a highlight is displayed on character item "D", the controller 290 may use the dictionary database and the user database that are stored in the storage 250 to search for a recommended character item for the character item "D". More specifically, the controller 290 may use the dictionary database and the user database to search for at least one having the highest probability among characters that may be input subsequent to the character item "D" as at least recommended character item for the character item "D". For example, the controller 290 may use the dictionary database and the user database to search for "A", "E", "I", and "O" as the character included in the recommended character item of the character item "D".

In this case, the controller 290 may preferentially retrieve the user database over the dictionary database to search for the recommended character item. For example, the controller 290 may preferentially retrieve the user database in which word information used by a user within a recently preset period is recorded and then may additionally retrieve the dictionary database.

In particular, if at least one recommended character item with respect to the selected character item overlaps with a character item adjacently disposed to the selected character item, the controller 290 may control the display 230 to exclude the adjacently disposed character item and display a recommended character having the second highest priority. That is, after searching for the recommended character item by using the dictionary database and the user database, the controller 290 may calculate a distance between a location of a character item corresponding to the recommended character item and a location of the selected character item and search for only the character item of which the calculated distance is equal to or more than the preset value as the selected recommended character item. For example, if the "A", "E", "I", and "O" are searched as the recommended character item of the character item "D" searched by using the dictionary database and the user database, the controller 290 may exclude the adjacently disposed "E" from the recommended character item and provide the "U" that is the character item of the second highest priority as the recommended character item. As described above, a user may receive a larger number of recommended character items by excluding the adjacently disposed character item from the recommended character item. In this case, the character item adjacently disposed to the selected character item may also include the selected character. For example, if "A", "D", F", and "G" are searched as a recommended character item of "F" that is the selected character item, the controller 290 may exclude the "F" that is the selected character item from the recommended character item and provide the "E" that is the character item having the second highest priority as the recommended character item.

As described above, if at least one recommenced character item is searched, the controller 290 may display at least one searched recommended character item around the selected first character item. In detail, after searching for at least one recommended character item, the controller 290 may display at least one recommended character item 410-1, 410-2, 410-3, and 410-4 so that the recommended character items 410-1, 410-2, 410-3, and 410-4 partially overlap with the "D" included in the selected character item and characters W, E, R, S, F, X, C, and V included in other adjacent character items. In this case, at least one recommended character item 410-1, 410-2, 410-3, and 410-4 may be disposed in up, down, left, and right directions of the selected character item "D". However, as described above, the at least one recommended character item 410-1, 410-2, 410-3, and 410-4 may be disposed in up, down, left, and right directions of the selected character item "G", which is only an example, in which the at least one recommended character item 410-1, 410-2, 410-3, and 410-4 may be disposed in a diagonal direction of the selected character item "G".

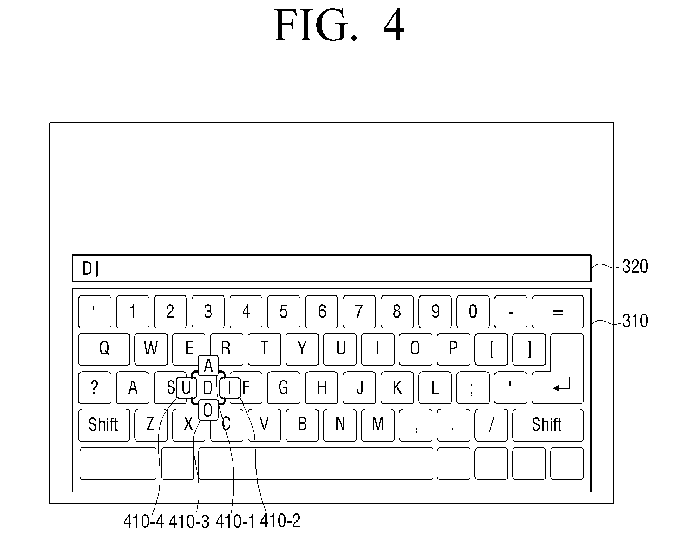

For example, if the "A", "I", "O", and "U" are selected as the recommended character item of the selected character item "D" through the input 280, as illustrated in FIG. 4, the controller 290 may display the four recommended character items 410-1, 410-2, 410-3, and 410-4 in the up, down, left, and right directions of the selected character item "G".

Meanwhile, it is described with reference to FIG. 4 that at least one recommended character item 410-1, 410-2, 410-3, and 410-4 is four, which is only one example. Therefore, the technical spirit of the present disclosure may be applied to even at least one other than four.

Further, the controller 290 may control the display 250 to display the plurality of character items included in the character input UI 310 and at least one recommended character item according to different methods. For example, the controller 290 may differently display the plurality of character items included in the character input UI 310 and at least one of color, luminosity, size, and transparency of the at least one recommended character item. Alternatively, the controller 290 may display at least one recommended character item to blink. In this case, the controller 290 may also consider a character item, which is adjacently located to the selected character item to be excluded from the recommended character item, as the recommended character item to be differently displayed from the plurality of character items included in the character input UI 310.

Further, as illustrated in FIG. 4, the controller 290 may control the display 230 to input the character "D" selected by the user to the character input window 320.

If at least one recommended character item is displayed and then one of the least one recommended character item is selected by moving the highlight through the input 280, the controller 290 may control the display 230 to display at least one new recommended character item for a combination of a character included in a first selected character item and a character included in a second selected recommended character item around the selected character item.

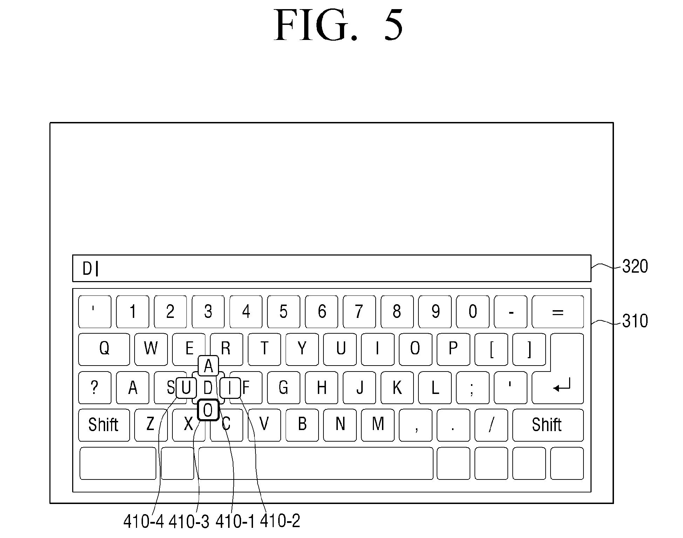

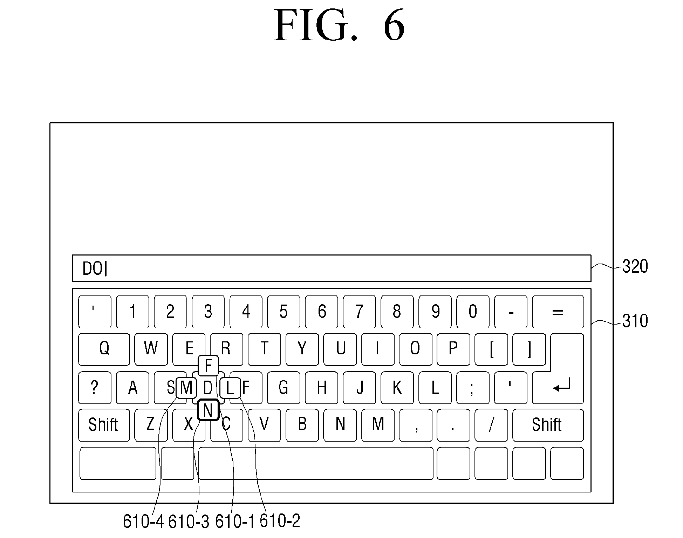

For example, if the four recommended character items 410-1, 410-2, 410-3, and 410-4 are displayed around the first selected character item "D" and then as illustrated in FIG. 5, the recommended character item "O" is selected secondly by moving the highlight through the input 280, the controller 290 searches for the at least one recommended character item for "DO" selected by a user and then as illustrated in FIG. 6, may control the display 230 to display character items including new searched recommended character items "F', "L", "N", and "M" 610-1, 610-2, 610-3, and 610-4 around the first selected character item "D".

Further, if the recommended character item is selected secondly, the first selected character item may be continuously displayed as the "D", which is only an example. Therefore, the first selected character item may be changed to the "O" to be displayed. In this case, a character item in which the "O" is originally disposed may be changed to the "D" to be displayed.

As described above, if one of the recommended character items is selected, a location where the new recommended character item is displayed is not changed, such that the movement of a highlight for inputting characters by a user may be minimized.

Further, the controller 290 may display at least one recommended character item for the "DO" selected by the user to dispose the recommended character item having the highest priority at the location of the "O" 620-2 that is the latest selected recommended character item. If one of the recommended character items is selected, the location where the new recommended character item is displayed is not changed and a recommended character item having the highest priority among the new recommended character items is disposed at a location at which a highlight is disposed, such that the movement of a pointer for inputting characters by the user may be minimized.

Further, as illustrated in FIG. 6, the controller 290 may input the character "DO" selected by the user to the character input window 320.

If at least one recommended character item is displayed and then other character items other then at least one recommended character item is selected through the input 280, the controller 290 may control the display 230 to display the at least one recommended character item around other character items.

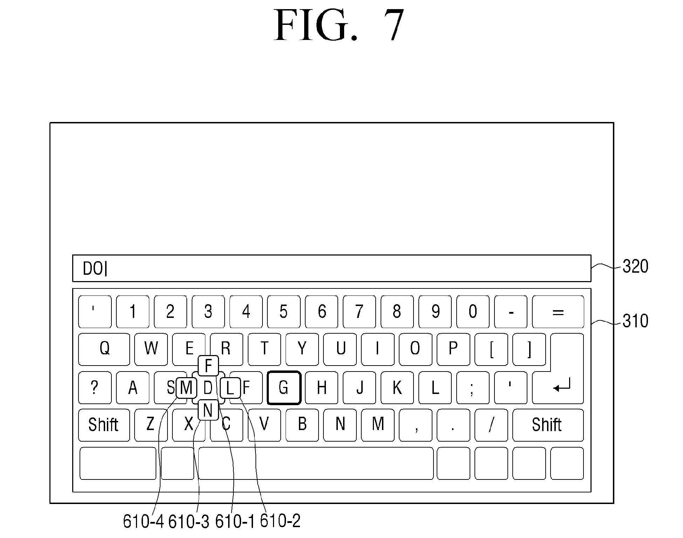

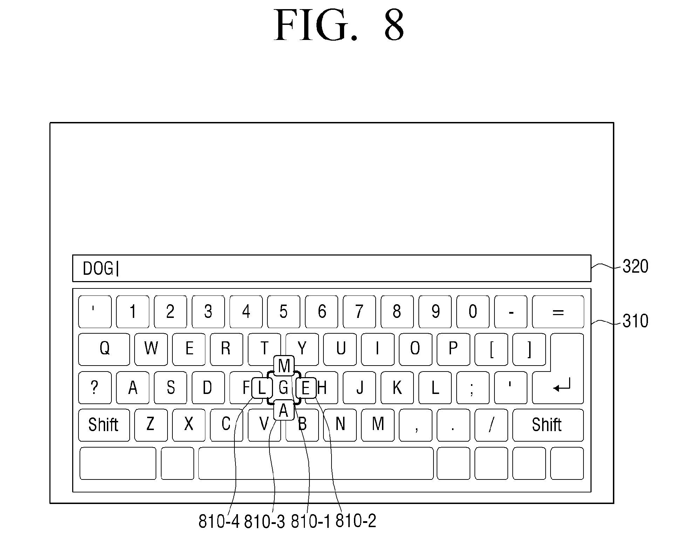

For example, if the second character item is selected, the four recommended character items 610-1, 610-2, 610-3, and 610-4 are displayed around the character item "D", and then as illustrated in FIG. 7, a character item "G" other than the four recommended character items 610-1, 610-2, 610-3, and 610-4 is selected thirdly by moving a highlight through the input 280, the controller 290 may search for at least one recommended character item for "DOG" selected by a user and then as illustrated in FIG. 8, control the display 230 to display new searched recommended character items "M", "E", "A", and "L" 810-1, 810-2, 810-3, and 810-4 around the third selected character item "G".

As described above, if the character is selected by moving the highlight, the recommended character is provided around the selected character, such that the user may input characters more quickly and accurately.

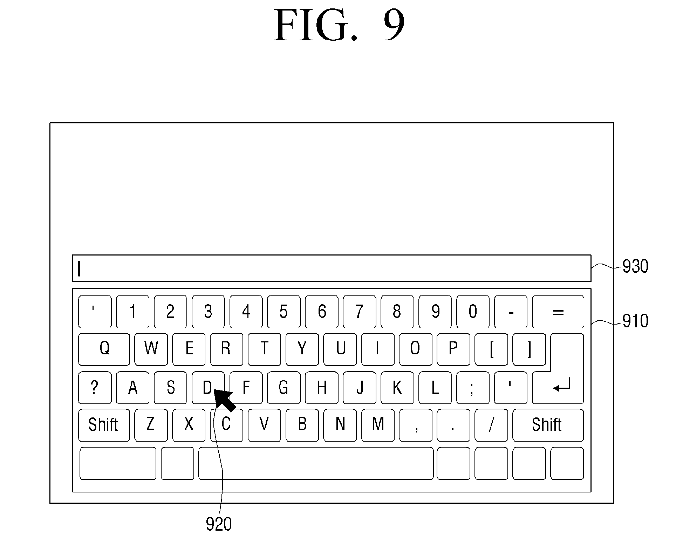

Hereinafter, a method for providing recommended characters in a first character input mode will be described with reference to FIGS. 9 to 14.

Above all, as illustrated in FIG. 9, if a character input UI 910, a cursor 920, and a character input window 930 are displayed and the input 280 inputs a select command (for example, user command pressing a confirmation button) while the cursor 920 is displayed on the character item "D", the controller 290 may use the dictionary database and the user database that are stored in the storage 250 to search for a recommended character for the character item "D". More specifically, the controller 290 may use the dictionary database and the user database to search for at least one having the highest probability among characters that may be input subsequent to the character item "D" as at least one recommended character for the character item "D". For example, the controller 290 may use the dictionary database and the user database to search for "A", "E", "I", and "O" as the character included in the recommended character item of the character item "D".

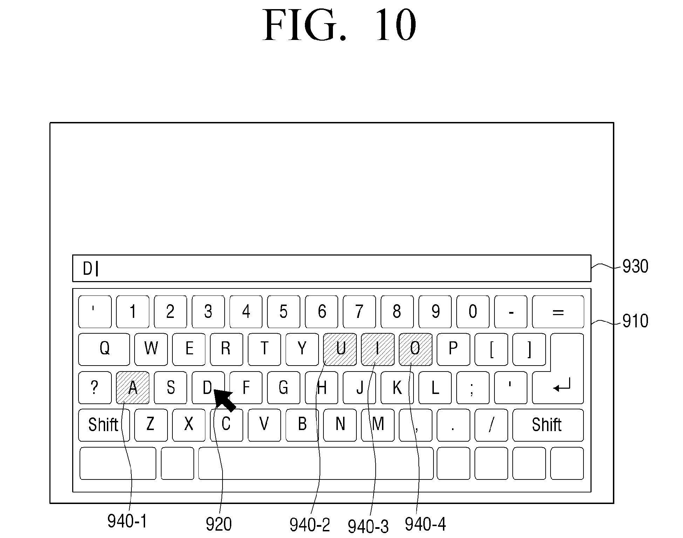

If at least recommended character is searched, the controller 290 may determine the character item including at least one searched recommended character as the recommended character item and control the display 230 to display the determined recommended character item to be different from other character items. In detail, the controller 290 may search for the at least one recommended character item and then as illustrated in FIG. 10, may control the display 230 to display character items "A", "U", "I", and "O" 940-1, 940-2, 940-3, and 940-4 that are character items including the selected recommended character in a color different from that of other character items.

Further, as illustrated in FIG. 10, the controller 290 may control the display 230 to input the character "D" selected by the user to the character input window 930.

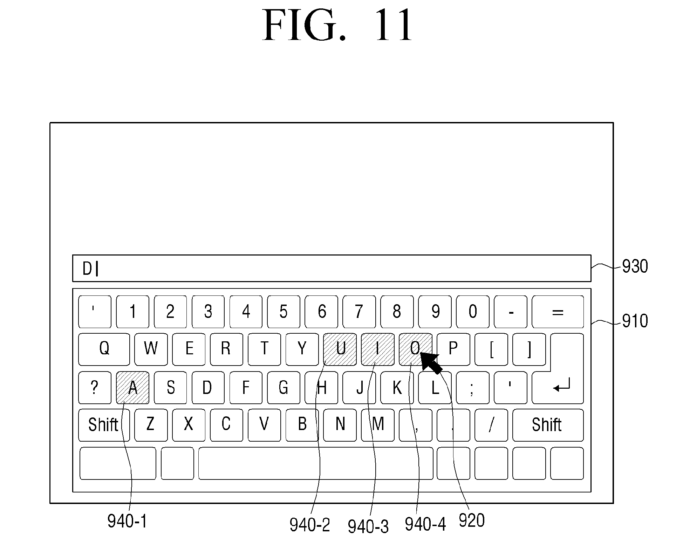

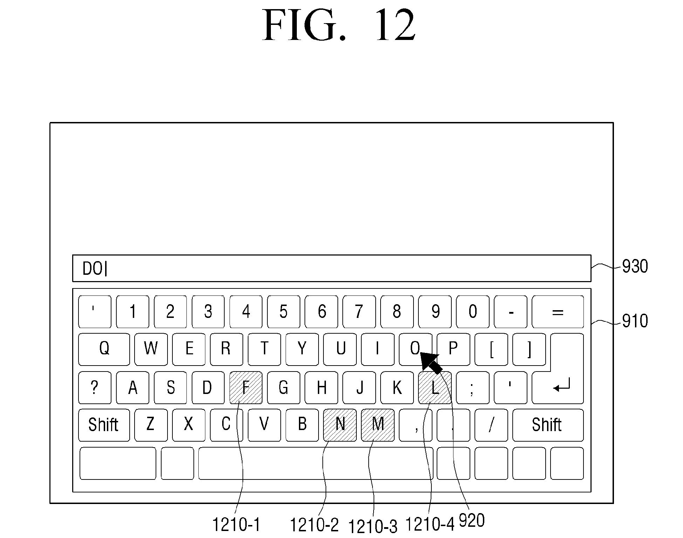

If the character item including the recommended character is displayed to be differentiated from other items and then as illustrated in FIG. 11, one of at least one recommended character item is selected by moving the cursor 920 through the input 280, the controller 280 may search for at least one new recommended character for a combination of a character included in a first selected character item and a character included in a second selected character item. For example, if the character item "D" is firstly selected and the character item "O" is secondly selected, the controller 290 may search for at least one recommended character for the "DO" selected by the user and as illustrated in FIG. 12, control the display 230 to display character items including "F", "N", "M", and "L" 1210-1, 1210-2, 1210-3, and 1210-4 including a new recommended character so that the character items are differentiated from other character items.

Further, as illustrated in FIG. 12, the controller 290 may control the display 230 to input a character "DO" selected by the user to the character input window 930.

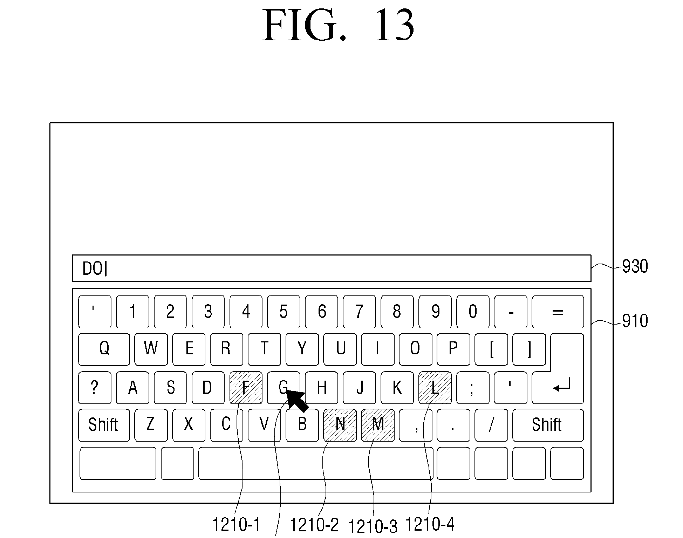

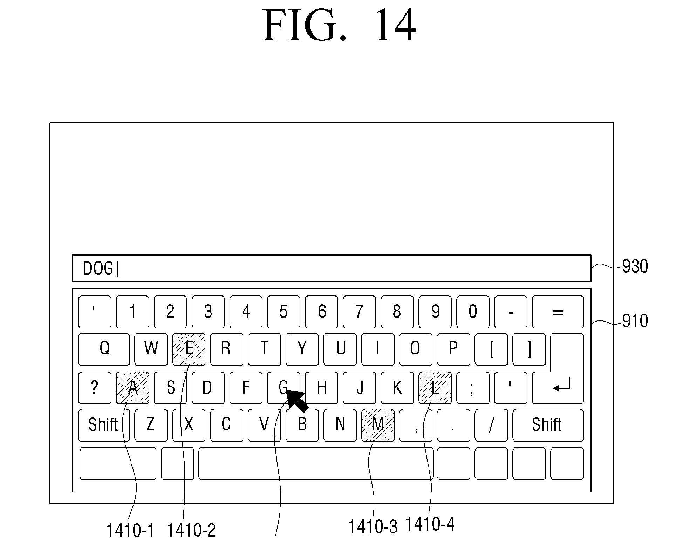

If the character item including the recommended character is displayed to be differentiated from other items and then as illustrated in FIG. 13, one of the character items other than at least one recommended character item is selected by moving the cursor 920 through the input 280, the controller 290 may search for at least one new recommended character for a combination of characters included in first to third selected character items. For example, if "D", "O", and "G" are selected firstly to thirdly, the controller 290 may search for at least one recommended character for the "DOG" selected by the user and as illustrated in FIG. 14, control the display 230 to display character items including "A", "E", "M", and "L" 1410-1, 1410-2, 1410-3, and 1410-4 including a new recommended character so that the character items are differentiated from other character items.

Further, as illustrated in FIG. 14, the controller 290 may control the display 230 to input a character "DOG" selected by the user to be input the character input window 930.

As described above, if characters are selected by using the cursor 920 moved depending on the user motion, the character item including the recommended character is displayed to be differentiated from other character items, such that the user may select characters more quickly.

Meanwhile, the foregoing exemplary embodiment describes that the character item including the recommended character is displayed to have a color different from that of other character items, which is only an example. Therefore, the character item including the recommended character may be displayed to be differentiated from other character items by other methods. For example, the display device 200 may change at least one of brightness, size, transparency, and blink of the character item including the recommended character to display the character item to be differentiated from other character items.

Further, if the characters are input by using the first character input mode and then the preset trigger operation is performed, the controller 290 may convert the character input mode of the display device 200 into the second character input mode. In this case, the preset trigger operation may be an operation of selecting the preset button of the input for inputting characters or touching the preset region, but is not limited thereto.

For example, as illustrated in FIG. 4, if the character "D" is input by using the first character input mode and then the preset trigger operation is performed, the controller 290 may convert the character input mode into the second character input mode to remove the recommended character item around the selected character item "D" from the display screen and as illustrated in FIG. 10, display the cursor 920 on the display screen and display the item including the recommended character to be differentiated from other character items.

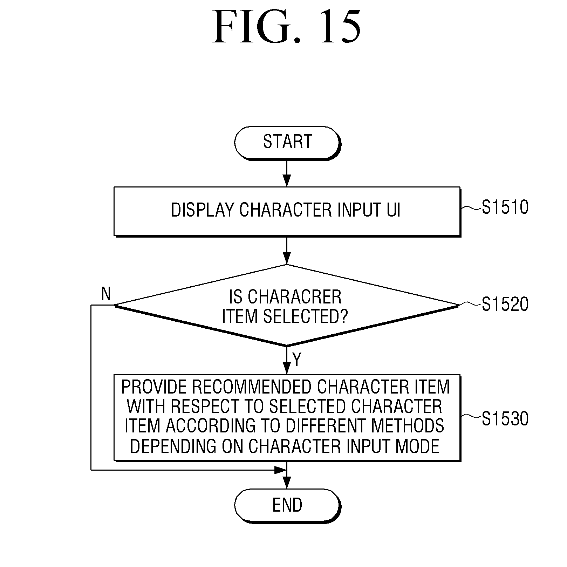

Hereinafter, a method for providing recommended characters of a display device according to an exemplary embodiment of the present invention will be described with reference to FIG. 15.

First, the display device 100 displays the character input UI (S1510). In this case, the character input UI may be a virtual keyboard form including a plurality of character items.

Further, the display device 100 determines whether one of the plurality of character items is selected (S1520).

If one of the plurality of character items is selected (S1520-Y), the display device 100 provides the recommended character item with respect to the selected character item according to different methods depending on the character input mode (S1530). In detail, if one of the plurality of character items is selected in the first character input mode, the display device 100 may display the recommended character item so that the recommended character item partially overlaps with the selected character item in up, down, left, and right directions of the selected character item. Further, if one of the plurality of character items is selected in the second character input mode, the display device 100 may change at least one of color, brightness, size, transparency, and blink of the character item corresponding to the recommended character of the selected character item so that the character item is displayed to be differentiated from other character items. In this case, the first character input mode may be the mode of inputting characters using the highlight through the four-way key or the touch pad and the second character input mode may be the mode of inputting characters using the cursor depending on the user motion. Here, when the preset trigger operation is performed while the first character input mode is maintained, the display 100 may convert the character input mode of the display device 100 from the first character input mode into the second character input mode.

As described above, it is possible for a user to more quickly and accurately input characters independent of the input mode by providing the recommended characters, according to different methods depending on the input mode.

Meanwhile, the method for providing recommended characters from the display device according to various exemplary embodiments as described above may be implemented as a program and may be provided to the display device.

In detail, a non-transitory computer readable medium stored with programs performing an operation of displaying a character input UI including a plurality of character items; and if one of the plurality of character items is selected, providing a recommended character item with respect to a selected character item according different methods depending on a character input mode may be provided.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

Although exemplary embodiments of the present disclosure have been illustrated and described hereinabove, the present disclosure is not limited to the above-mentioned specific exemplary embodiments, but may be variously modified by those skilled in the art to which the present disclosure pertains without departing from the scope and spirit of the disclosure as disclosed in the accompanying claims. These modifications should also be understood to fall within the scope of the present disclosure.

## Claims

1. A method for providing recommended characters from a display device, comprising:
displaying a character input UI including a plurality of character items; and
providing a recommended character item with respect to a selected character item, according to different methods depending on a character input mode, when one of the plurality of character items is selected

2. The method for providing recommended characters as claimed in claim 1, wherein in the providing, when one of the plurality of character items is selected in a first character input mode, the recommended character item of the selected character item is displayed around the selected character item, and when one of the plurality of character items is selected in a second character input mode, a character item corresponding to a recommended character of the selected character item from the plurality of character items is displayed to be differentiated from other character items.

3. The method for providing recommended characters as claimed in claim 2, wherein in the providing, when one of the plurality of character items is selected in the first character input mode, the recommended character item is displayed to partially overlap with the selected character item in up, down, left, and right directions of the selected character item.

4. The method for providing recommended characters as claimed in claim 2, wherein in the providing, when one of the plurality of character items is selected in the second character input mode, at least one of color, brightness, size, transparency, and blink of the character item corresponding to the recommended character of the selected character item is changed so that the character item is displayed to be differentiated from the other character items.

5. The method for providing recommended characters as claimed in claim 2, wherein the first character input mode is a mode of inputting characters using a highlight through a four-way key or a touch pad and the second character input mode is a mode of inputting characters using a cursor depending on a user motion.

6. The method for providing recommended characters as claimed in claim 2, further comprising: converting the character input mode of the display device into the second character input mode, when a preset trigger operation is performed while the first character input mode is maintained.

7. The method for providing recommended characters as claimed in claim 6, wherein the preset trigger operation is an operation of selecting a preset button of an input for inputting characters or touching a preset region.

8. The method for providing recommended characters as claimed in claim 1, wherein in the providing, at least one character having the highest probability among characters that are input subsequent to a character included in the selected character item is searched as at least one recommended character with respect to the character included in the selected character item by using a dictionary database and a user database in which word use information of a user is recorded.

9. A display device, comprising:
a display displaying a character input UI including a plurality of character items;
an input receiving a user command for inputting characters; and
when one of the plurality of character items is selected through the input, a controller providing a recommended character item with respect to the selected character item, according to different methods depending on a character input mode.

10. The display device as claimed in claim 9, wherein the controller controls the display to display the recommended character item of the selected character item around the selected character item when one of the plurality of character items is selected in a first character input mode, and displays a character item corresponding to a recommended character of the selected character item from the plurality of character items so that the character item is differentiated from other character items, when one of the plurality of character items is selected in a second character input mode.

11. The display device as claimed in claim 10, wherein the controller controls the display to display the recommended character item so that the recommend character item partially overlaps with the selected character item in up, down, left, and right directions of the selected character item, when one of the plurality of character items is selected in the first character input mode.

12. The display device as claimed in claim 10, wherein when one of the plurality of character items is selected in the second character input mode, the controller controls the display to change at least one of color, brightness, size, transparency, and blink of the character item corresponding to the recommended character of the selected character item so that the character item is displayed to be differentiated from the other character items.

13. The method for providing recommended characters as claimed in claim 10, wherein the first character input mode is a mode of inputting characters using a highlight through a four-way key or a touch pad and the second character input mode is a mode of inputting characters using a cursor depending on a user motion.

14. The method for providing recommended characters as claimed in claim 10, wherein the controller converts the character input mode of the display device into the second character input mode, when a preset trigger operation is performed while the first character input mode is maintained.

15. The display device as claimed in claim 14, wherein the preset trigger operation is an operation of selecting a preset button of the input for inputting characters or touching a preset region.
